(19) **Europäisches Patentamt European Patent Office Office européen des brevets**

(11) **EP 4 585 324 A1**

(12) **EUROPEAN PATENT APPLICATION**
published in accordance with Art. 153(4) EPC

(43) Date of publication:
16.07.2025 Bulletin 2025/29

(51) International Patent Classification (IPC):
*B22C 1/00* (2006.01)    *B33Y 80/00* (2015.01)
*B33Y 70/00* (2020.01)

(21) Application number: 23863040.4

(22) Date of filing: 30.08.2023

(52) Cooperative Patent Classification (CPC):
B22C 1/00; B33Y 70/00; B33Y 80/00

(86) International application number:
PCT/JP2023/031396

(87) International publication number:
WO 2024/053501 (14.03.2024 Gazette 2024/11)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 09.09.2022 JP 2022143576

(71) Applicant: ITOCHU CERATECH Corporation
Aichi 489-0895 (JP)

(72) Inventors:
• MAKINO, Hiroshi
  Seto-shi, Aichi 489-0895 (JP)
• SATO, Shunichi
  Seto-shi, Aichi 489-0895 (JP)
• HORI, Shota
  Seto-shi, Aichi 489-0895 (JP)
• MASUDA, Keita
  Seto-shi, Aichi 489-0895 (JP)

(74) Representative: Müller-Boré & Partner
Patentanwälte PartG mbB
Friedenheimer Brücke 21
80639 München (DE)

(54) **REFRACTORY AGGREGATE FOR CASTING SAND**

(57) Provided is a refractory aggregate that is for casting sand and that comprises spherical refractory sintered particles artificially produced by a sintering method, and that can improve the fluidity of the casting sand and can achieve excellent mold strength. This refractory aggregate is for casting sand, comprises spherical refractory sintered particles artificially produced by a sintering method, is configured to have a roundness of at least 0.70 and an average particle size of 0.01-1.00 mm, and is configured such that the total volume of pores having a pore size of 2-10 μm as measured with a mercury intrusion porosimeter is in the range of 0.20-0.50 mL/g, and the amount of fine powder is additionally mixed such that the turbidity as measured by turbidimetry is at most 3000 NTU.

EP 4 585 324 A1

## Description

This application is a continuation of the International Application No. PCT/JP2023/031396 filed on August 30, 2023, which claims the benefit under 35 U.S.C.§119(a)-(d) of Japanese Application No.2022-143576 filed on September 9, 2022, the entireties of which are incorporated herein by reference.

TECHNICAL FIELD

The present invention relates to a refractory aggregate for foundry sand, and in particular to a refractory aggregate consisting of spherical refractory sintered particles artificially produced by a sintering method, which improves the fluidity of foundry sand obtained by using the refractory aggregate and advantageously increases the strength of molds made from such foundry sand.

BACKGROUND ART

Conventionally, one type of molds used for casting molten metals such as cast iron, cast steel, aluminum, copper, or alloys thereof has been known which is molded into a desired shape using casting sand (foundry sand) obtained by mixing or kneading refractory particles (aggregate) with a predetermined binder, hardener (catalyst), etc. In such cases, organic binders, mainly phenolic resins and furan resins, or inorganic binders, mainly water glass or clay, are used as binder to bind refractory aggregate. Various molding methods using such foundry sand are known, including the raw mold method, gas mold method, shell mold method, three-dimensional laminated molding method, etc. By any of these molding methods, casting molds, especially self-hardening molds, are made with voids (casting cavities) of the desired casting shape.

By the way, natural sands such as silica sand, zircon sand, olivine sand and chromite sand are widely used, as the refractory particles (aggregate) that constitute the main part of the foundry sand used in producing such molds. However, natural products have variations in quality, such as physical and chemical properties. And in recent years, natural products also have the problem of depletion due to a decrease in resources. For these reasons, artificially produced refractory particles have been proposed and put into practical use. For example, in Japanese Examined Patent Application Publication No. Hei 3-47943 and Japanese Examined Patent Application Publication No. Hei 4-40095, certain sintering methods are disclosed. There, a raw material composition in which alumina and silica are mixed to have a specified chemical composition is granulated into spherical particles by a method using a spray dryer or the like, and the granulated particles are then sintered in a rotary kiln or the like to produce spherical aggregate.

However, in the case of artificial sand made of refractory sintered particles produced by the above-mentioned sintering method, although the sphericity(roundness) is good, the particle surfaces become uneven or porous by firing. Therefore, molds made from foundry sand adding a predetermined amount of binder (resin) to such artificial sand have problems such as insufficient strength. Furthermore, if the amount of the binder added is increased in order to avoid such surface condition problems, there is a problem that the resulting sand does not become fluid, in other words, the foundry sand does not have good fluidity. Especially, when making a mold, it is not always possible to achieve the desired mold with the flow characteristics of sand (aggregate) alone. In making a mold, it is important to consider not only the flow characteristics of the sand (aggregate) itself, but also its flow characteristics when mixed with resin or hardener, etc., when considering its application to actual mold.

Thus, sintered sand, which is an artificial sand, has inherent problems that must be solved in terms of improving the fluidity when it is used as foundry sand and strength of the molds produced. Especially, when producing molds of complex shapes by hand molding, injection molding, three-dimensional laminated molding method, or the like, it is required that the foundry sand obtained by kneading with a binder or the like maintains good fluidity, while the molds produced from it have high strength.

In Japanese Unexamined Patent Application Publication (JP-A) No.2006-7319, it is described that, the degree of amorphization and sphericity of the sand particles produced by the flame melting method are specified to produce casting molds with excellent flowability, high strength, and low thermal expansion. However, it is unlikely that the less uneven the sand surface is, the better the fluidity of the sand. On the contrary, if the sand surface is less uneven, a thick binder (resin) layer that affects the fluidity will form, resulting in poor fluidity of the foundry sand.

In addition, JP-A No.2003-311370 proposes aggregate for the furan process, which is used in manufacturing casting molds by mixing aggregate such as sand with furan resin and a hardener, kneading the mixture, and molding the mixture, wherein the aggregate has been previously treated to remove fine powder or basic ions. And it has been shown that by using this aggregate, a high strength mold can be produced. However, in that document, it is not clear how the fines adhering to the aggregate surface affect the fluidity of the foundry sand mixed with binder and the like. Moreover, nothing is made clear about how the surface of the aggregate should be adjusted.

Furthermore, JP-A No.2009-119469 discloses a self-hardening flow mold using artificial sand having a sphericity of 0.8 or more, which is produced by a heat fusion method or a flame fusion method. Paragraph [0006] of the document points out that although artificial sand obtained by a sintering method has good sphericity, problems arise such as the occurrence of unevenness on the sand surface or the sand surface becoming porous during firing, which means that unless the amount of resin (binder) added is increased, the sand will not have enough strength, and that, due to these surface problems, if the amount of resin added is increased, the sand will not become fluid. However, it is difficult to believe that an increase in the amount of resin (binder) added will result in poor flowability due to an increase in the amount of unevenness on the sand surface. If the amount of resin (binder) added is sufficient to achieve the same level of mold strength, the flowability is expected to be the same regardless of the amount of unevenness on the sand surface. This is because, it is assumed that the thickness of the binder, etc. on the sand surface contributes to the fluidity and mold strength, and if the thickness is about the same, it is assumed that the fluidity and mold strength will be the same.

PRIOR ART DOCUMENTS

PATENT DOCUMENTS

Patent Document 1: Japanese Examined Patent Application Publication No. Hei 3-47943
Patent Document 2: Japanese Examined Patent Application Publication No. Hei 4-40095
Patent Document 3: JP-A-2006-7319
Patent Document 4: JP-A-2003-311370
Patent Document 5: JP-A-2009-119469

SUMMARY OF THE INVENTION

TECHNICAL PROBLEMS

The present invention has been made against the background of the above circumstances, and the problem to be solved by the present invention is to provide a refractory aggregate for foundry sand, which is made of spherical sintered particles and can exhibit excellent properties. Another object of the present invention is to provide a refractory aggregate for foundry sand, which is made of spherical refractory sintered particles artificially produced by a sintering method, and which can improve the fluidity of the foundry sand and realize excellent mold strength.

SOLUTION TO PROBLEMS

In order to solve the above-mentioned problems, the present invention can be preferably embodied in various modes as described below, and each of the modes described below can be adopted in any combination. It is to be understood that the modes and technical features of the present invention are not limited to those described below, and can be recognized based on the inventive concept disclosed in the specification taken as a whole.

The first mode of the present invention for solving the above-mentioned problems is following: a refractory aggregate for foundry sand, consisting of spherical refractory sintered particles artificially produced by a sintering method, characterized in that, the refractory sintered particles have a roundness of 0.70 or more and an average particle size of 0.01-1.00 mm; a total volume of pores with a pore diameter of 2-10 $\mu$m of the refractory sintered particles, measured by a mercury intrusion porosimeter, is within a range of 0.20-0.50 mL/g; and an amount of fine powder mixed in the refractory sintered particles is 3000 NTU or less in terms of turbidity measured by a turbidimetric method.

The second mode of the refractory aggregate for foundry sand according to the present invention is characterized in that the refractory sintered particles have a chemical composition containing 40-90% by mass of $Al_2O_3$ and 60-10% by mass of $SiO_2$.

The third mode of the present invention is characterized in that the refractory sintered particles have a chemical composition containing 60% by mass or more of $Al_2O_3$ and 40% by mass or less of $SiO_2$, and further have a total content of $Fe_2O_3$ and $TiO_2$ of 3% by mass or less.

The fourth mode of the refractory aggregate for foundry sand according to the present invention is characterized in that the refractory sintered particles are sintered mullite particles or sintered mullite-corundum particles.

In addition, the fifth mode of the present invention is characterized in that the roundness is 0.75 or more.

Moreover, the sixth mode of the present invention is characterized in that the total volume of the pores with a diameter of 2-10 $\mu$m is within a range of 0.25-0.45 mL/g.

And the seventh mode of the refractory aggregate for foundry sand according to the present invention is characterized in that the amount of the fine powder mixed in the refractory sintered particles is configured to have a turbidity of 2000 NTU or less.

The eighth mode of the refractory aggregate for foundry sand according to the present invention is characterized in that being used as an aggregate for foundry sand for molding self-hardening molds.

The nineth mode of the refractory aggregate for foundry sand according to the present invention is characterized in that being used as an aggregate for foundry sand in a three-dimensional laminated molding method.

In addition, the tenth mode of the present invention is a casting mold obtained by molding using the above-mentioned refractory aggregate for foundry sand.

ADVANTAGEOUS EFFECTS OF THE INVENTION

By using the refractory aggregate for foundry sand according to the present invention, the fluidity of the foundry sand obtained by mixing or kneading it with a binder, a hardener, etc. can be effectively improved. The strength of the mold produced using such foundry sand can be improved even more advantageously.

The refractory aggregate for foundry sand according to the present invention can be particularly advantageously used as an aggregate for foundry sand for producing self-hardening molds, and as an aggregate for foundry sand in a three-dimensional laminated molding method.

BRIEF DESCRIPTION OF THE DRAWINGS

Fig.1 is the graph showing the relationship between the roundness and the fluidity or mold strength of various artificial sands obtained in Example 1.

Fig.2 is the graph showing the relationship between the total volume of pores with a diameter of 2 to 10 $\mu$m diameters in various artificial sands and fluidity or mold strength obtained in Example 1.

Fig.3 is the graph showing the relationship between turbidity (NTU) and fluidity or mold strength for various artificial sands obtained in Example 1.

MODE FOR CARRYING OUT THE INVENTION

The refractory aggregate for foundry sand according to the present invention is made of spherical refractory sintered particles artificially produced by a sintering method, and any known artificial sintered particles can be objected as the artificial sand as long as they are spherical and refractory. Specifically, there is sintered sand obtained by granulating using a spray drying method and then firing in a rotary kiln, and there is sintered sand obtained by granulating using a rolling granulation method and then firing in a rotary kiln. In terms of material, it is also possible to use sintered mullite, sintered alumina, or the like. The spherical refractory particles obtained by such a sintering method have fine unevenness on the particle surface, and since the binder components and the like can penetrate into such unevenness, in the present invention, an adjustment of surface properties is adopted as one means for improving fluidity of foundry sand and mold strength.

The spherical refractory sintered particles (aggregate) of the present invention preferably have a chemical composition consisting of 40% by mass or more of $Al_2O_3$ (alumina) and 60% by mass or less of $SiO_2$ (silica). Among them, a chemical composition containing 40-90% by mass of $Al_2O_3$ and 60-10% by mass of $SiO_2$ is advantageously employed in the present invention. Here, if the content of $Al_2O_3$ is too low, in other words, if the content of $SiO_2$ is too high, the thermal expansion of the sintered particles becomes large, making it difficult to advantageously use the sintered particles as the refractory sintered particles according to the present invention. Especially, in the present invention, the refractory sintered particles preferably have a chemical composition containing 60% by mass or more of $Al_2O_3$ and 40% by mass or less of $SiO_2$, and further, the total content of $Fe_2O_3$ and $TiO_2$ is 3% by mass or less. By controlling the contents of $Fe_2O_3$ and $TiO_2$ as impurities in this manner, sintered particles having high thermal resistance can be obtained. In the present invention, refractory sintered particles (aggregate) made of mullite or mullite-corundum, which is in the above-mentioned chemical composition, is preferably used. Here, the term "mullite-corundum" is used to mean a state in which the crystal structure of mullite and the crystal structure of corundum coexist or are dispersed in a particle.

In the present invention, the spherical refractory sintered particles have a spherical shape that can be recognized as substantially spherical, and generally, a roundness of the refractory sintered particles is advantageously 0.70 or more, preferably 0.75 or more, and more preferably 0.80 or more. By using spherical refractory sintered particles having such roundness, the characteristics of the present invention can be exhibited more advantageously.

Here, the roundness of the refractory sintered particles can be measured by a known method, and, for example, can be measured by a particle shape analyzer: PartAn SI manufactured by MicrotracBEL Corporation. The above-mentioned measuring device consists of a sample cell, a strobe LED and a highly sensitive CCD camera. The measurement principle of this device is following: While circulating water with a pump, a sample (refractory sintered particles) is added, and the water containing the sample particles passes through a sample cell placed between a strobe LED light source and a CCD camera. The projected image obtained at this time is analyzed to determine the projected area and maximum Feret diameter of each particle. Then, from the obtained values of maximum Feret diameter and projected area, the roundness of each particle is calculated using the following formula: Roundness = [4 x projected area $(mm^2)$] / [$\pi$ x {maximum Feret diameter $(mm)$}$^2$]. Specifically, 5,000 or more sample particles are added, the roundness of each particle is calculated, and then the total roundness values obtained are averaged by the number of particles measured, thereby determining the roundness (average value).

The refractory sintered particles (refractory aggregate) according to the present invention have an average particle diameter of 0.01-1.00 mm, preferably about 0.05-0.50 mm, and more preferably about 0.07-0.40 mm. If the average particle size of the refractory sintered particles is too small, the particles become difficult to be handled, which can lead to problems such as difficulties in forming a casting mold. On the other hand, if the average particle size becomes too large, it becomes difficult to fully exhibit the characteristics of the present invention, and in addition, it also gives rise to the problem of a deterioration in the quality of the cast product. The average particle size herein means the particle size (D50) at an integrated value of 50% in the particle size distribution determined by a laser diffraction / scattering method.

Incidentally, in the case of refractory sintered particles artificially produced by a sintering method, the particle surface has a large number of small holes, called micropores, mesopores, or macropores, with pore diameters ranging from 0.1 nm to 1000 $\mu$m, which form an uneven surface shape. And the physical properties of sintered particles are deeply related to the nature of such pores. For this reason, in the past, the unevenness of such particle surfaces has been evaluated using surface roughness (Ra) to evaluate large unevenness, small unevenness, and even fine unevenness, or using porosity (water absorption rate) to evaluate medium unevenness, small unevenness, and even fine unevenness. However, those evaluation methods make it difficult to fully grasp the physical properties of the sintered particles, especially the fluidity of foundry sand obtained by mixing (kneading) the sintered particles with a binder or the like, and the strength of a mold produced using such foundry sand.

Therefore, the present inventors have evaluated the unevenness of the surface of sintered particles at an arbitrary pore diameter, by using a mercury porosimeter based on the mercury intrusion method or a mercury intrusion type porosimeter to determine the pore volume. As a result, it became clear that the presence of large or fine unevenness has almost no effect on the absorption of the binder and the coating thickness, which affect the fluidity of the foundry sand, but is affected mainly by medium or small unevenness with pore diameters in the range of 2-10 $\mu$m, and furthermore, that even among such pores with diameters of 2-10 $\mu$m, the important factor is the pore volume (total volume) in the range of 0.20-0.50 mL/g, as measured by the above-mentioned mercury intrusion method.

The mercury intrusion method (mercury intrusion porosimeter) involves applying pressure to mercury to force it into pores or gaps on the surface of a particle, and calculating the diameter of the pores from the pressure applied at that time. Here, the amount of intrusion of mercury is the volume of the pores, and since the pore volume for each pore diameter can be calculated by changing the pressure, the total volume of pores having a pore diameter of 2-10 $\mu$m is determined as the sum of the pore volumes for pores having a pore diameter of 2-10 $\mu$m. If the total volume of pores with a pore diameter of 2-10 $\mu$m is lower (smaller) than 0.20 mL/g or higher (larger) than 0.50 mL/g, as will be discussed later, this will have an adverse effect on the fluidity of the foundry sand and the strength of the mold to be produced. Especially, in the present invention, the sintered particles, in which of a total volume of pores with a diameter of 2-10 $\mu$m is within a range of 0.25-0.45 mL/g, are advantageously used.

In addition, spherical refractory sintered particles artificially produced by a sintering method inevitably contain fine powder. When such refractory sintered particles are mixed (kneaded) with a binder or the like to obtain foundry sand, the binder or the like adheres to the fine powder, adversely affecting the strength of the resulting mold. Therefore, in the present invention, the amount of fine powder mixed (being contained) in the refractory sintered particles (refractory aggregate) is adjusted so that the turbidity measured by a known turbidimetric method is 3000 NTU or less, preferably 2000 NTU or less, and more preferably 1000 NTU or less. If refractory sintered particles containing a mixed amount of fine powder with a turbidity exceeding 3000 NTU are used, problems will arise such as making it difficult to achieve high mold strength.

Here, the turbidity measured by a turbidimetric method is calculated as an NTU (nephelometric turbidity unit) value by uniformly mixing a sample (fireproof sintered particles) with water, allowing it to stand, collecting the supernatant, and comparing the scattered light intensity with the transmitted light intensity. For example, the turbidity can be measured using Portable Turbidity Meter 2100Q manufactured by HACH Corporation (USA, sold by DKK-TOA Corporation). The determined turbidity can also be calibrated using a Formazine standard solution to obtain NTU=FTU [°C (Formazine)].

In producing the spherical refractory sintered particles (refractory aggregate for foundry sand) according to the present invention having the above-mentioned properties, a raw material composition obtained by mixing Al2O3 raw material and SiO2 raw material so as to give the above-mentioned chemical composition is used, and a method is adopted in which sintered particles having the desired roundness and average particle size are artificially produced according to a conventionally known sintering method. In this case, in order to ensure that the total volume of pores having a diameter of

2-10 μm falls within the range specified in the present invention, it is necessary to control the unevenness of the particle surface.

Incidentally, the surface unevenness of sintered particles is derived from crystallization. For example, refractory particles containing mullite ($3Al_2O_3$-$2SiO_2$) as a main component have needle-like crystals formed on the surface of the particle, which are randomly oriented, resulting in convex portions. So, selecting producing conditions that prevent such the needle-like crystals from growing leads to the suppression of convex portions. Therefore, when producing the above-mentioned mullite-based refractory sintered particles, for example, a method is advantageously employed in which the firing temperature is lowered when firing the spherical granules of the raw material composition in a rotary kiln, thereby suppressing or preventing the precipitation of mullite crystals. In addition, the total pore volume of pores that give the desired pore diameter can be adjusted by performing surface polishing (mechanical polishing) after the firing step or the granulation step, or by performing surface coating using an inorganic substance such as water glass to fill in convex portions.

In addition, regarding the amount of fine powder mixed in the refractory aggregate for foundry sand (refractory sintered particles), a dust collection operation can be carried out in the sizing process carried out after firing of the granulated material, and by changing the dust collection force, the amount of fine powder mixed in the sintered particles that is removed can be controlled, and sintered particles that satisfy the turbidity defined in the present invention can be prepared.

It should be understood that reclaimed sand obtained by subjecting collected sand collected from a mold making process or a casting process, etc., to a specified regeneration treatment can also be the subjects of the present invention as long as the roundness, average particle size, total volume of pores with a pore diameter of 2-10 μm, and turbidity defined in the present invention are satisfied, and thus the features of the present invention can be exhibited.

The refractory aggregate for foundry sand according to the present invention thus obtained is mixed or kneaded with a known suitable binder such as an inorganic binder or an organic binder, a hardener (catalyst), etc., in the same manner as in the conventional method, to prepare foundry sand. Thereafter, the desired casting molds, especially inorganic or organic self-hardening molds, are formed according to the usual molding methods, such as the raw mold method, gas mold method, shell mold method, etc., so that the features of the invention can be advantageously exhibited. In addition, the features of the present invention can be even more advantageously exhibited when used as a refractory aggregate for foundry sand in three-dimensional laminated molding method.

EXAMPLES

To clarify the present invention more specifically, some examples of the invention will be described below, but it goes without saying that the present invention is not limited to the details of such examples. Further, it is to be understood that in addition to the illustrated examples and the foregoing description, the present invention may be embodied with various other changes, modifications and improvements, which may occur to those skilled in the art without departing from the spirit and scope of the invention.

Example 1

First, natural sand, fused sand and sintered sands A-H having the chemical compositions and average particle sizes shown in Table 1 below were prepared as refractory aggregates for foundry sand. As natural sand, Wedron Silica Sand (made in USA) was obtained from Hisagoya Co., Ltd., and as fused sand, GREEN BEADS (produced by KINSEI MATEC CO., LTD.) was obtained. Furthermore, for the sintered sands A-H, raw material compositions giving each of the chemical composition shown in Table 1 below were used in accordance with a known sintering method, and spherical granules were formed using a spray dryer. Then, the granules were sintered in a rotary kiln and sized, so as to obtain each of sintered sand. In producing these sintered sands A-H, each of the firing temperature was set as shown in Table 1, and dust collection or not was selected in the granulation process. And, the dust collection force was changed for each of sintered sands, resulting in a difference in the amount of fine powder removed for each of sintered sands.

Table 1

| Refractory aggregate | Chemical composition | | Average particle size (mm) | Firing temperature (°C) | Dust collection in the granulation process |
|---|---|---|---|---|---|
| | $SiO_2$ (%) | $Al_2O_3$ (%) | | | |
| Natural sand | 99.80 | 0.10 | 0.24 | - | - |

(continued)

| Refractory aggregate | Chemical composition | | Average particle size (mm) | Firing temperature (°C) | Dust collection in the granulation process |
|---|---|---|---|---|---|
| | $SiO_2$ (%) | $Al_2O_3$ (%) | | | |
| Sintered sand A | | | 0.21 | 1750 | Not available |
| Sintered sand B | | | 0.20 | 1700 | Available (Change of the dust collection force) |
| Sintered sand C | | | 0.20 | 1680 | |
| Sintered sand D | 36.34 | 60.60 | 0.21 | 1660 | |
| Sintered sand E | | | 0.20 | 1640 | |
| Sintered sand F | | | 0.21 | 1620 | |
| Sintered sand G | | | 0.20 | 1600 | |
| Sintered sand H | | | 0.23 | 1550 | |
| Fused sand | 19.27 | 72.34 | 0.27 | - | - |

Next, a roundness, pore volume, mold strength and fluidity of each of the various refractory aggregates were measured according to the following methods. The results of the roundness, pore volume, mold strength and fluidity obtained are shown in Table 2 below.

Measurement of roundness

Using a particle shape analyzer: PartAn SI manufactured by MicrotracBEL, a projected area and maximum Feret diameter of each refractory aggregate (particle) are determined, and a roundness of each particle is calculated from the obtained maximum Feret diameter and projected area values using on the roundness calculation formula in the present specification. Then, the roundness of each of 5000 or more particles was calculated, and the total circularity was averaged by the number of particles measured to obtain the roundness (average value), which was used as the roundness of each refractory aggregate.

Measurement of pore volume

Measuring device: AutoPore IV9520 (manufactured by SHIMADZU CORPORATION)
Measuring pressure range: atmospheric pressure to 50,000 psia (345 MPa) (Low Pressure Port: under 30 psia, High Pressure Port: 30 to 50,000 psia)
Sample weight: about 1.5 g

Approximately 1.5 g of the sample is filled into a specified container, and mercury is then pressed into the container. Gradually increase the mercury pressure from atmospheric pressure and measure the pressure and the amount of mercury pressurized in when the pressure is increased. Then, from the measured mercury pressure, the pore diameter of the sample particles is calculated using the following formula.

$$d = -4\sigma (\cos \theta) / P$$

(Here, the shape of the pore is assumed to be cylindrical with a diameter of d (m), and the surface tension of mercury is $\sigma$ (N/m), the contact angle between the mercury and the sample particle is $\theta$ (°), and the pressure applied to mercury is P (Pa).)
Moreover, since an amount of intrusion of mercury is a volume of pores, the pore volume for each pore diameter can be calculated by changing the pressure. The pore volume in the pore diameter: 2-10 $\mu$m is integrated, so that is specified as the total volume of pores 2-10 $\mu$m, while the pore volume in the pore diameter exceeding 10 $\mu$m is integrated, so that is specified as the total volume of pores diameter exceeding 10 $\mu$m.

Measurement of mold strength

First, 100 parts by mass of refractory aggregate was mixed with 0.6 parts by mass each of a first component consisting of a phenol-formaldehyde resin (manufactured by ASK Chemicals Japan CO. LTD., ISOCURE Part I 330T) which is a cold box resin, and a second component which is a polyisocyanate (manufactured by ASK Chemicals Japan Co. LTD., ISOCURE Part II 630T), and the resulting mixed sand (foundry sand) was used and filled into a metal mold with 30 mm x 10 mm x 85 mm by air blowing. Thereafter, triethylamine, a tertiary amine catalyst, is blown into the mold to harden the filled foundry sand, thereby producing the desired mold (test piece).

Next, the prepared mold (test piece) is used and kept in an environment of temperature: 25°C and humidity: 55% RH for 24 hours, and then a bending strength (kg/cm$^2$) is measured using an autograph (manufactured by SHIMADZU CORPORATION, AUTOGRAPH AG-X plus 20kN) under conditions of a span of 50 mm and a descent rate of 5 mm/min.

Evaluation of fluidity

Using mixed sand prepared by adding water in an amount of 0.1% by mass to each refractory aggregate and kneading the mixture, a fluidity (tap flow) evaluation test is carried out in accordance with JIS-R-2521 (1995). Specifically, the mixed sand to be measured was packed into a cylindrical flow cone with an upper diameter of 37 mm, a lower diameter of 88 mm, and a height of 74 mm. The flow cone was then removed, and a drop motion from a height of 12 mm was given five times using a flow table. The maximum diameter of the crumbled mixed sand and the diameter perpendicular to this were then measured, and the average value was taken as the flow value, which was used as an index of the fluidity of the mixed sand. The larger the flow value, the better the fluidity.

Table 2

| Refractory aggregate | Particle shape | Surface unevenness | | Fluidity | Mold strength |
|---|---|---|---|---|---|
| | Roundness (-) | Total volume of pores with a diameter of 2-10 μm (mL/g) | Total volume of pores with a diameter of exceeding 10 μm (mL/g) | [Tap flow] (mm) | [Cold box] (kg/cm$^2$) |
| Natural sand | 0.60 | 0.25 | 3.85 | 180.2 | 18.3 |
| Sintered sand A | 0.68 | 0.60 | 3.10 | 239.7 | 4.8 |
| Sintered sand B | 0.70 | 0.50 | 3.18 | 232.1 | 14.2 |
| Sintered sand C | 0.82 | 0.41 | 3.37 | 221.1 | 24.4 |
| Sintered sand D | 0.82 | 0.30 | 3.53 | 218.3 | 32.6 |
| Sintered sand E | 0.83 | 0.22 | 3.81 | 189.2 | 50.7 |
| Sintered sand F | 0.84 | 0.31 | 3.44 | 220.3 | 41.4 |
| Sintered sand G | 0.84 | 0.33 | 3.59 | 217.8 | 40.4 |
| Sintered sand H | 0.80 | 0.20 | 3.73 | 198.5 | 38.0 |
| Fused sand | 0.93 | 0.17 | 1.41 | 167.1 | 60.0 |

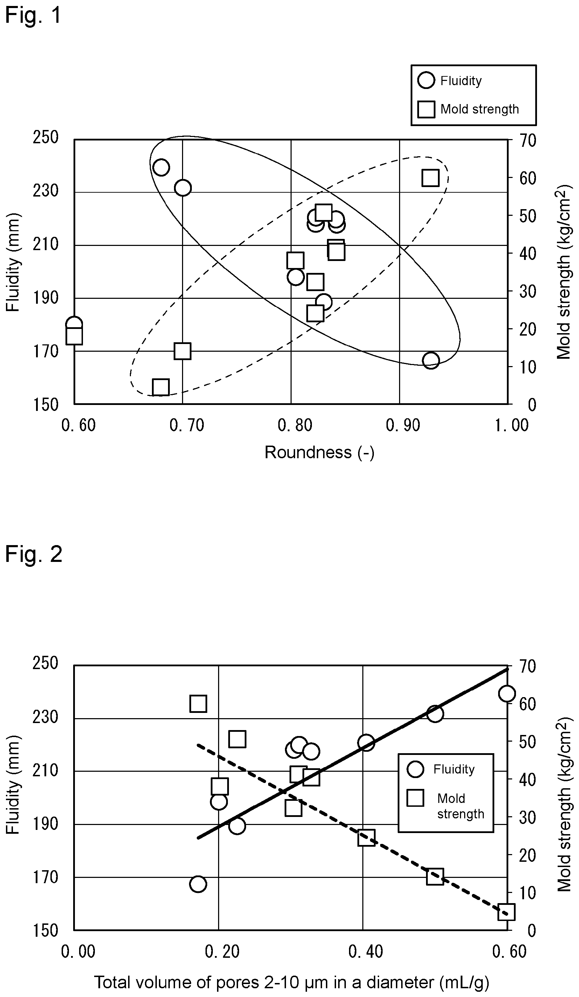

When the results of Table 2 are plotted on the relationship between the roundness and the fluidity, and the relationship between the roundness and the mold strength, for each refractory aggregate, the result is as shown in FIG.1. It is recognized that there is a tendency that the smaller the value of roundness (the less circular the particles are), in other words, the more non-spherical the particles are, the better the fluidity (see the area surrounded by the long ellipse drawn with solid line in the figure). This is thought to be because the amount of water affecting the flow (water thickness on the sand surface) decreases as the roundness decreases. The Sintered sands A-H have smaller roundness and show better fluidity than the fused sand. On the other hand, the natural sand is recognized to have low fluidity. This may be believed to be due to the angular shape of the natural sand and its low roundness.

It is also recognized that the mold strength tends to decrease as the roundness of the refractory aggregate decreases (see the area surrounded by the long ellipse drawn with broken line in FIG. 1). Similar to the effect on fluidity described above, it is thought that as the roundness of the refractory aggregate decreases, or in other words, as it becomes less circular, the surface area of the refractory aggregate increases, and the amount of binder effective in developing mold strength is reduced.

From the above results, it is recognized that in order to obtain good fluidity and high mold strength, it is necessary to use refractory aggregate with a roundness of 0.70 or more.

FIG. 2 is a plot of the relationship between the total volume of pores with a diameter of 2-10 $\mu$m and the fluidity, and the relationship between the total volume of pores with a diameter of 2-10 $\mu$m and the mold strength, for each refractory aggregate in Table 1. It is seen therein that the greater the total pore volume of pores with a diameter of 2-10 $\mu$m is, the better the fluidity is exhibited (see the solid line in the figure). This is thought to be because, as the total pore volume increases, the amount of water that enters the pores increases, and the amount of water that affects the fluidity (water thickness on the sand surface) decreases. All of the sintered sands A-H used as the refractory aggregate exhibit good fluidity, while the fused sand gives a low value of fluidity. This is thought to be because the pore volume of the fused sand is very small, resulting in a thick water layer on the sand surface.

Therefore, in order to obtain good fluidity in foundry sand, it is considered necessary that the total volume of pores with a diameter of 2-10 $\mu$m (total pore volume) in the refractory aggregate is 0.20 mL/g or more.

Furthermore, with regard to the relationship with the mold strength shown in FIG. 2, it is observed that as the total volume of pores with a diameter of 2-10 $\mu$m increases, the mold strength tends to decrease, as shown by the broken line. In particular, it can be seen that the strength of the mold obtained using the sintered sand A is low. The reason for this lower mold strength is thought to be that as the total pore volume increases, the amount of binder effective in developing mold strength decreases as the binder penetrates into the unevenness on the surface of the refractory aggregate.

For this reason, in order to obtain high mold strength, it is considered effective for the total volume of pores with a diameter of 2-10 $\mu$m of the sintered sand (the sintered particles) to be 0.50 mL/g or less.

Table 2 above also shows the measurement results for the total volume of pores with a diameter of exceeding 10 $\mu$m. When considering the relationship among the total volume of pores with a diameter of exceeding 10 $\mu$m, the fluidity and mold strength, unlike the relationship among the total volume of pores with a diameter of 2-10 $\mu$m, the fluidity and mold strength, it is clear that the total volume of pores with a diameter of exceeding 10 $\mu$m hardly contributes to the fluidity or mold strength.

From the above results, it is recognized that in order to obtain good fluidity and high mold strength, it is necessary to use a refractory aggregate having a total volume of pores with a diameter of 2-10 $\mu$m within the range of 0.20-0.50 mL/g.

Here, the turbidity of each of the sintered sands A-H used as the refractory aggregate was measured according to the following turbidimetric method in order to know the amount of residual fine powder. The results are shown in Table 3 below, together with the fluidity and mold strength shown in Table 2, which were previously determined.

Measurement of turbidity

20 g of the refractory aggregate to be measured and 50 mL of water are stirred and mixed with a stirrer for 30 minutes. Thereafter, the supernatant obtained after standing for 30 minutes is used to determine the turbidity (NTU) using a 90° scattering light/transmitted light ratio measurement method (transmitted scattering method) turbidity meter (manufactured by HACH Corporation, Portable Turbidity Meter 2100Q, USA, sold by DKK-TOA Corporation). The smaller the turbidity (NTU) value, the smaller the amount of fine powder present.

Table 3

| Refractory aggregate | Amount of fine powder | Fluidity | Mold strength |
|---|---|---|---|
| | Turbidity (NTU) | [Tap flow] (mm) | [Cold box] (kg/cm$^2$) |
| Sintered sand A | 3500 | 239.7 | 4.8 |
| Sintered sand B | 2614 | 232.1 | 14.2 |
| Sintered sand C | 916 | 221.1 | 24.4 |
| Sintered sand D | 113 | 218.3 | 32.6 |
| Sintered sand E | 35 | 189.2 | 50.7 |
| Sintered sand F | 290 | 220.3 | 41.4 |
| Sintered sand G | 245 | 217.8 | 40.4 |
| Sintered sand H | 91 | 198.5 | 38.0 |

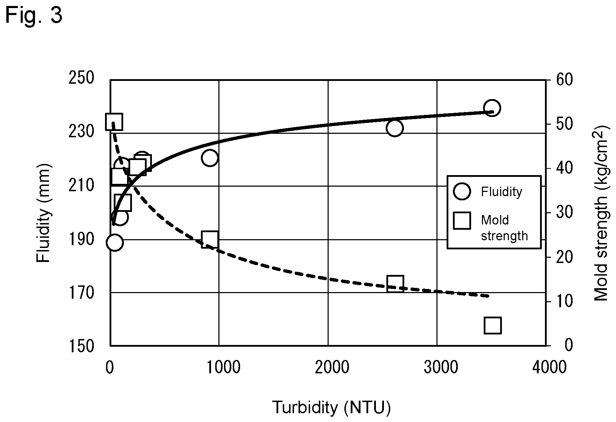

The relationship between turbidity and fluidity, and the relationship between turbidity and mold strength, for each sintered sand shown in Table 3, are shown in FIG.3. There, as shown by the solid line, it is recognized that the higher the turbidity (NTU), the better the fluidity of the sintered sands A-H. This is thought to be because, as the turbidity increases, more fine powder remains in the sintered sand, and the amount of water that adheres to the increased fine powder increases, reducing the amount of water that affects the flow (the thickness of water on the sand surface).

On the other hand, the mold strength decreased as the turbidity increased, and the sintered sand A showed a particularly low value. The reason for this is that when the turbidity is high and the amount of residual fine powder is large, the binder adheres to the fine powder on the surface of the sintered sand, reducing the amount of binder effective in developing mold strength.

Therefore, with regard to the turbidity corresponding to the amount of fine powder mixed in the sintered sand, it is important to configure the turbidity to be 3000 NTU or less in order to achieve good fluidity and high mold strength.

Example 2

As in Example 1 described above, the sintered sands I-O and the fused sand having the chemical compositions and average particle sizes shown in Table 4 below were prepared as refractory aggregates for foundry sand. The fused sand therein was the same as that prepared in Example 1. As for the sintered sands I-O, finer sintered sands were formed according to the same sintering method as in Example 1. In the sintering process, the firing temperature was set as shown in Table 4, and in the granulation process, dust collection was selected or not. Furthermore, the dust collection force was changed for each sintered sand, thereby creating a difference in the amount of fine powder removed from each sintered sand.

Table 4

| Refractory aggregate | Chemical composition | | Average particle size (mm) | Firing temperature (°C) | Dust collection in the granulation process |
|---|---|---|---|---|---|
| | $SiO_2$ (%) | $Al_2O_3$ (%) | | | |
| Sintered sand I | 36.34 | 60.60 | 0.12 | 1750 | Not available |
| Sintered sand J | | | 0.13 | 1700 | Available (Change of the dust collection force) |
| Sintered sand K | | | 0.12 | 1680 | |
| Sintered sand L | | | 0.12 | 1660 | |
| Sintered sand M | | | 0.11 | 1640 | |
| Sintered sand N | | | 0.12 | 1620 | |
| Sintered sand O | | | 0.13 | 1600 | |
| Fused sand | 19.27 | 72.34 | 0.12 | - | - |

Next, the roundness, total pore volume, mold strength and fluidity of each of the various refractory aggregates were measured in the same manner as in Example 1. The obtained results of the roundness, total pore volume, mold strength and fluidity are shown in Table 5 below.

The test pieces (molds) for measuring mold strength were prepared using furan resin as a binder. Specifically, 0.2% by mass of a hardener (C-17, manufactured by Kao-Quaker Company Limited) was added to the refractory aggregate and mixed, and then 1.0% by mass of a furan resin (EF-5301, manufactured by Kao-Quaker Company Limited) was added and further mixed to obtain mixed sand. The mixed sand thus obtained was then filled into a wooden frame with 50 mm (φ)×50 mm (H), and after hardening, it was kept in an environment of temperature: 30°C. and humidity: 80% RH for 24 hours to prepare test pieces (molds). The bending strength of the obtained test piece (mold) was measured using the autograph in the same manner as in Example 1.

To evaluate the fluidity, 0.2% by mass of a hardener (C-17, manufactured by Kao Quaker Corporation) was added to the refractory aggregate, and the mixed sand obtained by kneading was used to determine the tap flow value in the same manner as in Example 1.

Table 5

| Refractory aggregate | Particle shape | Surface unevenness | Fluidity | Mold strength |
|---|---|---|---|---|
| | Roundness (-) | Total volume of pores with a diameter of 2-10 μm (mL/g) | [Tap flow] (mm) | [Furan] (kg/cm$^2$) |
| Sintered sand I | 0.68 | 0.61 | 210.2 | 5.2 |

(continued)

| Refractory aggregate | Particle shape | Surface unevenness | Fluidity | Mold strength |
|---|---|---|---|---|
| | Roundness (-) | Total volume of pores with a diameter of 2-10 $\mu$m (mL/g) | [Tap flow] (mm) | [Furan] (kg/cm$^2$) |
| Sintered sand J | 0.71 | 0.49 | 201.0 | 13.1 |
| Sintered sand K | 0.73 | 0.44 | 193.2 | 19.9 |
| Sintered sand L | 0.76 | 0.39 | 191.4 | 28.6 |
| Sintered sand M | 0.80 | 0.33 | 180.4 | 45.6 |
| Sintered sand N | 0.83 | 0.25 | 175.0 | 49.8 |
| Sintered sand O | 0.86 | 0.21 | 170.9 | 53.3 |
| Fused sand | 0.93 | 0.17 | 146.7 | 59.8 |

As is clear from the results in Table 5, in fine-grained sintered sand, the more the unevenness of the surface (total volume of pores with a diameter of 2-10 $\mu$m), the higher the fluidity (tap flow value). And, the mold strength using the furan resin also showed a tendency to decrease as the evenness of the surface increases. Especially, the sintered sand I had a high total pore volume (0.61 mL/g) and therefore showed high fluidity, but the mold strength (Fran) was low.

From these findings, it was revealed that the mold strength showed a similar tendency to that of Example 1 even when furan resin was used. Furan resin is widely used in the production of casting molds not only for hand compaction molding using wooden molds, but also for three-dimensional laminated molding method using 3D molding machines. In the three-dimensional laminated molding method, for example, a mold is produced by recoating mixed sand made by kneading refractory aggregate and a hardener by vibration or the like, and dripping furan resin only onto the desired molding locations. In addition, the mold produced after the furan resin is dripped tends to have low mold strength, unlike the mold produced by the hand compaction molding method in which the mold is tamped down. Therefore, when removing a mold produced by laminated method, the mold needs to have appropriate mold strength to withstand the vibrations that occur when removing the mold and to withstand being carried. A mold produced by laminated method is generally required to have strength of 10 kg/cm$^2$ or more. In addition, when producing a mold having a complex shape, from the viewpoint of mold surface roughness, fine-grained foundry sand having a median grain size of about 0.11 mm to 0.13 mm is widely used. Therefore, in three-dimensional laminated molding method, higher fluidity and higher mold strength are required when using fine-grained refractory aggregate.

From the results in Table 5 above, it is clear that the mold strength using furan resin on fine-grained sintered sand also has a high correlation with the pore volume. Therefore, it is clear that not only in the hand compaction molding method but also in the three-dimensional laminated molding method, by using sintered sand with a limited pore volume (0.20-0.50 mL/g), it is possible to produce a good mold with high mold strength while maintaining good fluidity. Especially, sintered sand J has furan strength of 13.1 kg/cm2 while maintaining high fluidity, which is sufficient mold strength for use in three-dimensional laminated molding method. In contrast, the fused sand has low surface unevenness, and as a result, its fluidity is significantly lower than that of the coarse-grained sand in Example 1. From this, it became clear that the fused sand has poor fluidity in three-dimensional laminated molding method and is not suitable for molding of sand mold.

In addition, in order to confirm the amount of remaining fine powder in each of the sintered sands I-O and the fused sand, the turbidity was measured by the turbidimetric method in the same manner as in Example 1, and the results are shown in Table 6 below, together with the fluidity and mold strength previously determined.

Table 6

| Refractory aggregate | Amount of fine powder | Fluidity | Mold strength |
|---|---|---|---|
| | Turbidity (NTU) | [Tap flow] (mm) | [Furan] (kg/cm$^2$) |
| Sintered sand I | 3620 | 210.2 | 5.2 |
| Sintered sand J | 2780 | 201.0 | 13.1 |
| Sintered sand K | 459 | 193.2 | 19.9 |
| Sintered sand L | 207 | 191.4 | 28.6 |
| Sintered sand M | 59 | 180.4 | 45.6 |
| Sintered sand N | 32 | 175.0 | 49.8 |

(continued)

| Refractory aggregate | Amount of fine powder | Fluidity | Mold strength |
|---|---|---|---|
| | Turbidity (NTU) | [Tap flow] (mm) | [Furan] (kg/cm$^2$) |
| Sintered sand O | 11 | 170.9 | 53.3 |
| Fused sand | 24 | 146.7 | 59.8 |

As is clear from the results in Table 6, in the sintered sands I-O, the higher the turbidity, the higher the fluidity. On the other hand, the mold strength of the mold using furan resin as the binder resin decreased, showing the same results as in Example 1. In particular, it was revealed that the sintered sand J has turbidity of 2780 NTU, which means that it maintains high fluidity while having furan strength of 13.1 kg/cm2, which is sufficient mold strength in three-dimensional laminated molding method. In addition, although the sintered sand O had low turbidity, it exhibited fluidity that could be used in three-dimensional laminated molding method. In contrast, it was found that the fused sand has significantly lower fluidity than the sintered sands. This is because each of the sintered sands has a moderate pore volume on the sand surface, and as a result of a large amount of hardener penetrating into the pore volume, the amount of hardener that affects flow (the thickness of the hardener on the sand surface) is reduced, resulting in good fluidity. On the other hand, the fused sand has a smaller pore volume on the sand surface, so the amount of hardener that affects flow is greater than that of the sintered sands, resulting in a significant decrease in fluidity.

**Claims**

1. A refractory aggregate for foundry sand, consisting of spherical refractory sintered particles artificially produced by a sintering method, **characterized in that**:

   the refractory sintered particles have a roundness of 0.70 or more and an average particle size of 0.01-1.00 mm; a total volume of pores with a pore diameter of 2-10 $\mu$m of the refractory sintered particles, measured by a mercury intrusion porosimeter, is within a range of 0.20-0.50 mL/g; and an amount of fine powder mixed in the refractory sintered particles is 3000 NTU or less in terms of turbidity measured by a turbidimetric method.

2. The refractory aggregate for foundry sand according to claim 1, wherein the refractory sintered particles have a chemical composition containing 40-90% by mass of $Al_2O_3$ and 60-10% by mass of $SiO_2$.

3. The refractory aggregate for foundry sand according to claim 1, wherein the refractory sintered particles have a chemical composition containing 60% by mass or more of $Al_2O_3$ and 40% by mass or less of $SiO_2$, and further have a total content of $Fe_2O_3$ and $TiO_2$ of 3% by mass or less.

4. The refractory aggregate for foundry sand according to claim 1, wherein the refractory sintered particles are sintered mullite particles or sintered mullite-corundum particles.

5. The refractory aggregate for foundry sand according to claim 1, wherein the roundness is 0.75 or more.

6. The refractory aggregate for foundry sand according to claim 1, wherein the total volume of the pores with a diameter of 2-10 $\mu$m is within a range of 0.25-0.45 mL/g.

7. The refractory aggregate for foundry sand according to claim 1, wherein the amount of the fine powder mixed in the refractory sintered particles is configured to have a turbidity of 2000 NTU or less.

8. The refractory aggregate for foundry sand according to claim 1, wherein is used as an aggregate for foundry sand for molding self-hardening molds.

9. The refractory aggregate for foundry sand according to claim 1, wherein is used as an aggregate for foundry sand in a three-dimensional laminated molding method.

10. A casting mold obtained by molding using the refractory aggregate for foundry sand according to claim 1.

## Fig. 1

## Fig. 2

Fig. 3

# EP 4 585 324 A1

## INTERNATIONAL SEARCH REPORT

International application No.

**PCT/JP2023/031396**

| A. | CLASSIFICATION OF SUBJECT MATTER |
|---|---|

*B22C 1/00*(2006.01)i; *B33Y 80/00*(2015.01)i; *B33Y 70/00*(2020.01)i
FI:    B22C1/00 K; B22C1/00 B; B33Y70/00; B33Y80/00

According to International Patent Classification (IPC) or to both national classification and IPC

| B. | FIELDS SEARCHED |
|---|---|

Minimum documentation searched (classification system followed by classification symbols)

B22C1/00; B33Y80/00; B33Y70/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| A | JP 2004-202577 A (KAO CORP) 22 July 2004 (2004-07-22)<br>    claims, paragraphs [0007]-[0041] | 1-10 |
| A | JP 2006-247743 A (KAO CORP) 21 September 2006 (2006-09-21)<br>    claims, paragraphs [0021], [0024], [0069], [0078]-[0079], [0086] | 1-10 |
| A | JP 2010-000521 A (ITOCHU CERATECH CORP) 07 January 2010 (2010-01-07)<br>    claims, paragraphs [0082]-[0087] | 1-10 |
| A | US 4026344 A (GENERAL ELECTRIC COMPANY) 31 May 1977 (1977-05-31)<br>    entire text, all drawings | 1-10 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 November 2023** | **21 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/031396**

| Patent document cited in search report | | | Publication date (day/month/year) | Patent family member(s) | Publication date (day/month/year) |
|---|---|---|---|---|---|
| JP | 2004-202577 | A | 22 July 2004 | US 2006/0005937 A1<br>claims, paragraphs [0007]-[0043]<br>EP 1595617 A1<br>CN 1723094 A<br>AU 2003289258 A<br>KR 10-2005-0088114 A | |
| JP | 2006-247743 | A | 21 September 2006 | US 2008/0274374 A1<br>claims, paragraphs [0024], [0027], [0072], [0089]-[0090]<br>EP 1757382 A1<br>CN 1929937 A<br>KR 10-2007-0018012 A | |
| JP | 2010-000521 | A | 07 January 2010 | (Family: none) | |
| US | 4026344 | A | 31 May 1977 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023031396 W
- JP 2022143576 A
- JP HEI347943 B
- JP HEI440095 B
- JP 2006007319 A
- JP 2003311370 A
- JP 2009119469 A